# EUROPÄISCHE PATENTANMELDUNG

(11) **EP 1 669 962 A2**
(43) Veröffentlichungstag der Anmeldung: **14.06.2006**
(21) Anmeldenummer: 05026706.1
(22) Anmeldetag: 07.12.2005
(51) Int. Cl.: G09B 11/00

(54) **Behinderten-Schreibhilfsmittel**

(30) Priorität: 08.12.2004 DE 202004018962 U
(71) Anmelder: Hammermeister, Michael, 75539 Eisingen (DE)
(72) Erfinder: Hammermeister, Michael, 75539 Eisingen (DE)
(74) Vertreter: Schön, Thilo

(57) **Zusammenfassung**

Ein Behinderten-Hilfsmittel nach Art einer Schreibhilfe oder nach Art einer Tipphilfe weist einen Sattel auf, der auf eine Hand aufgesteckt werden kann. Am Sattel ist eine Haltevorrichtung für ein Schreibwerkzeug oder ein Fortsatz angeordnet.

## Beschreibung

Die Erfindung betrifft ein Behinderten-Hilfsmittel nach Art einer Schreibhilfe nach Anspruch 1 und ein Behinderten-Hilfsmittel nach Art einer Tipphilfe nach Anspruch 5.

Menschen, die durch eine Lähmung in den Fingern oder in der Hand nicht mehr in der Lage sind, einen Stift zu halten, ist es unmöglich, zu schreiben. Oft wäre es ihnen eine große Hilfe, wenn sie wenigstens ihre Unterschrift geben oder sich durch wenige geschriebene Worte mitteilen könnten. Gerade Menschen mit einer Querschnittslähmung oder Schlaganfallpatienten beherrschen gedanklich das Bild von Schrift und Text sehr gut.

Die bisherigen Hilfsmittel für solche Patienten weisen erhebliche Mängel auf. Dies betrifft sowohl die Befestigung des Hilfsmittels an der Hand, wie auch die mechanische Haltbarkeit. Vor allem ist es bei einer Schreibhilfe wichtig, dass diese an der Hand gut fixiert ist, damit ein Schreibwerkzeug so geführt werden kann, wie das vom Gehirn der Hand vorgegeben wird.

Patienten mit einer solchen Lähmung sind im Beruf auf derartige Hilfsmittel angewiesen, und es ist wichtig, dass sie sich voll und ganz auf solche Hilfsmittel verlassen können. Gerade beim Wiedererlernen des Schreibens nach einer Lähmung, oder bei der Teilnahme an Maltherapie, sind Schreibhilfen ein wichtiges Hilfsmittel.

Dasselbe gilt für die Tipphilfe, den Hand- und Fingergelähmte benötigen, um auf dem Tastenfeld eines Computers schreiben zu können. Auch hier ist eine sichere Führung der Tipphilfe und eine robuste Bauweise Voraussetzung dafür, dass ein solches Hilfsmittel zuverlässig genutzt werden kann.

Es ist deshalb eine Aufgabe der Erfindung, ein neues Behinderten-Hilfsmittel bereit zu stellen, welches den speziellen Anforderungen behinderter Menschen gerecht wird.

Nach einem ersten Aspekt der Erfindung wird diese Aufgabe gelöst durch den Gegenstand des Anspruchs 1. Eine solche Schreibhilfe hat den Vorteil, dass sie gut auf der Hand sitzt, so dass das Schreibwerkzeug tatsächlich die Bewegungen ausführt, welche das Gehirn der Hand vorgibt. Das erleichtert es, nach einer Lähmung das Schreiben wieder zu erlernen, und der Behinderte kann sauberer und deutlicher schreiben. Dabei wird das Schreibwerkzeug sehr sicher gehalten, und man vermeidet eine unerwünschte Veränderung der Lage des Schreibwerkzeugs beim Schreibvorgang.

Nach einem zweiten Aspekt der Erfindung wird die Aufgabe gelöst durch den Gegenstand des Anspruchs 5. Eine solche Tipphilfe ermöglicht es einem Hand- oder Finger-Gelähmten, auf der Tastatur eines Computers zu schreiben oder z.B. eine Telefonanlage zu betätigen. Durch die Einbeziehung des Daumens ergibt sich ein ausgezeichneter Halt des Hilfsmittels an der Hand, und damit eine Reduzierung von Schreibfehlern.

Weitere Einzelheiten und vorteilhafte Weiterbildungen der Erfindung ergeben sich aus den im folgenden beschrieben und in der Zeichnung dargestellten, in keiner Weise als Einschränkung der Erfindung zu verstehenden Ausführungsbeispielen.
Es zeigt:
- Fig. 1: eine raumbildliche Darstellung eines Behinderten-Hilfsmittels in Form einer erfindungsgemäßen Schreibhilfe,
- Fig. 2: eine Draufsicht auf die Schreibhilfe, gesehen in Richtung des Pfeiles II der
- Fig. 3: einen Schnitt, gesehen in Richtung der Linie III-III der Fig. 2,
- Fig.4: eine raumbildliche Darstellung, welche besonders klar die Befestigung eines Schreibwerkzeugs zeigt,
- Fig. 5: eine raumbildliche Darstellung, welche den Schreibvorgang bei einem Finger- oder Hand-Gelähmten zeigt,
- Fign. 6-12: eine alternative Ausführungsform der in den Figuren 1 bis 5 gezeigten Schreibhilfe,
- Fig. 13: ein Behinderten-Hilfsmittel in Form einer Tipphilfe nach der Erfindung, in raumbildlicher Darstellung,
- Fig. 14: einen Schnitt, gesehen längs der Linie VII-VII der Fig. 13,
- Fig. 15: eine raumbildliche Darstellung, welche die Benutzung eines erfindungsgemäßen Tipphämmerchens zeigt, und
- Fig. 16: eine raumbildliche Darstellung analog Fig. 15, aber gesehen aus einem anderen Blickwinkel.

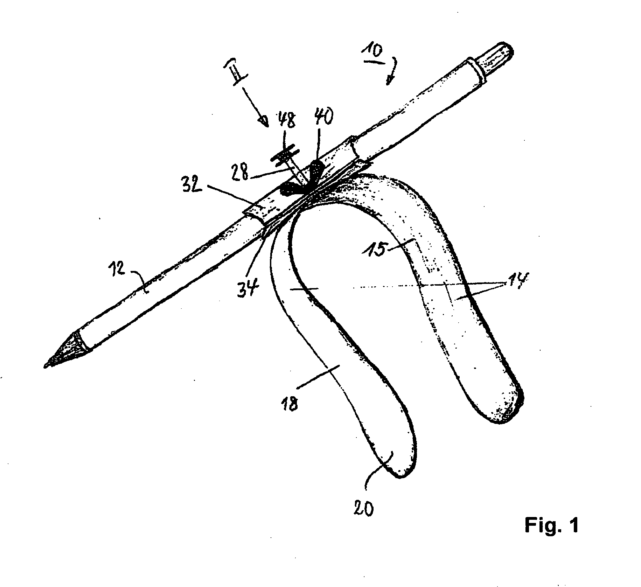

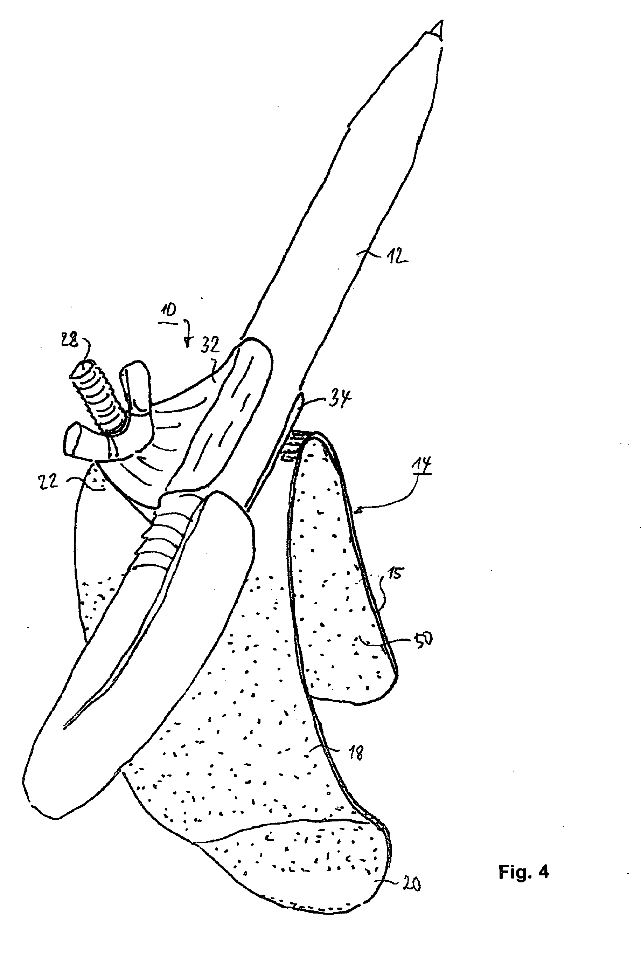

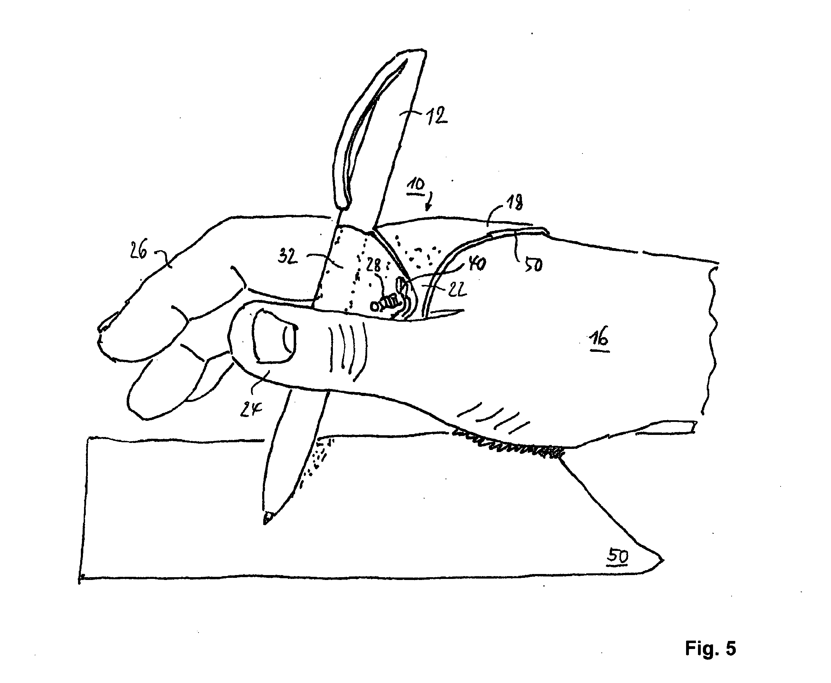

Fig. 1 zeigt eine Schreibhilfe 10, an der zur Veranschaulichung ein Druckbleistift 12 (Fig. 1 bis 3) oder ein Kugelschreiber (Fig. 4) befestigt ist. Diese Schreibhilfe 10 hat einen Sattel 14, der aus einem duktilen Metall hergestellt ist, bevorzugt aus Messing. Durch die duktilen Eigenschaften des Metalls lässt sich der Sattel individuell und ergonomisch zur Hand biegen, wobei die Federspannkraft des Sattels flächig verteilt wird. Dieser Sattel 14 hat eine Innenbacke 15, die im Gebrauch gegen die Innenfläche der Hand 16 des Behinderten anliegt, und er hat eine Außenbacke 18, die bei Benutzung gegen den Handrücken dieser Hand 16 anliegt, wie in Fig. 5 dargestellt. Hierdurch ergeben sich zwei gegenüberliegende Drucklager, wobei das eine Drucklager am Handrücken und das andere Drucklager an der Handinnenfläche anliegt, so dass ein Gegenlager gewährleistet ist. Die Außenbacke 18 ist an ihrem freien Ende 20 etwas von der Hand 16 weg gebogen, wie das am besten Fig. 4 zeigt, und dies ermöglicht es dem Behinderten, die Schreibhilfe 10 mit Hilfe der anderen Hand wegzuschieben und sozusagen "auszuziehen".

Am Übergang von der Innenbacke 15 zur Außenbacke 18 des Sattels 14 befindet sich ein sogenannter Sattelblock 22. Wie Fig. 5 zeigt, wird dieser zwischen Daumen 24 und Zeigefinger 26 der schreibenden Hand 16 eingeführt, wobei der Daumen 22 weggebogen wird. Am proximalen Ende dieses Sattelblocks 22 ist in einem Innengewinde 23 eine Flachkopfschraube 28 so eingeschraubt, dass ihr flacher Kopf 30 zur Hand 16 zeigt, also in proximaler Richtung.

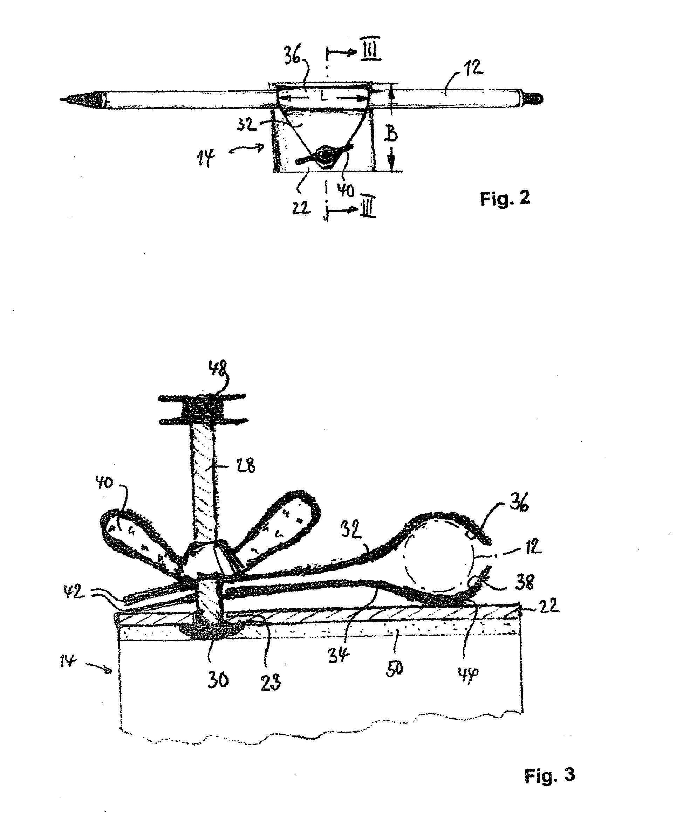

Die Schraube 22 dient zur Befestigung von zwei pratzenartigen Haltern 32, 34, welche an ihren freien Enden, also in Fig. 3 rechts, jeweils mit einer runden Formhöhlung 36 bzw. 38 versehen sind, zwischen welche bei Benutzung das Schreibwerkzeug 12 eingespannt wird, das in Fig. 3 strichpunktiert angedeutet ist.

Zum Festspannen der Haltepratzen 32, 34 dient bevorzugt eine Flügelmutter 40, welche auf die Schraube 28 aufgeschraubt wird, vgl. Fig. 3.

Dabei presst die Mutter 40 die Haltepratzen 32, 34 mit deren in Fig. 3 linken Enden 42 gegen die proximale Seite des Sattelblocks 22, und sie presst die untere Haltepratze 34 mit der Außenseite 44 von deren Rundung gegen die distale Seite des Sattelblocks 22, vgl. Fig. 3, wobei die Haltepratzen 32, 34 elastisch vorgespannt werden. Deshalb liegt die untere Haltepratze 34 mit elastischer Vorspannung an zwei Stellen gegen den Sattelblock 22 an, was bei ausreichender Vorspannung eine Verdrehung des Schreibwerkzeugs 12 gegenüber dem Sattel 14 sicher verhindert. Dies ist deshalb wichtig, weil vielfach die Lage des Schreibwerkzeugs 12 am Sattel 14 durch eine Hilfsperson eingestellt wird und der Behinderte dann wünscht, dass sich diese einmal eingestellte Lage ungewollt nicht mehr ändern soll. Dazu trägt auch bei, dass die Länge L (Fig. 2) der runden Abschnitte 36, 38 etwa der Breite B des Sattels 14 entspricht, was eine gute Klemmung und Führung des Schreibwerkzeugs 12 gewährleistet. Weiterhin wird die vom Schreibwerkzeug eingeleitete Kraft auf die zwei Auflagestellen der unteren Haltepratze 34 verteilt. Dadurch wird ein Verkippen des Sattels verhindert und die Kraft wird gleichmäßig über die gesamte Breite des Sattels 14 verteilt.

Man sieht anhand der Figuren 4 und 5, dass die Haltepratzen 32,34 so orientiert sind, dass sich das von ihnen gehaltene Schreibwerkzeug 12 auf der dem Daumen abgewandten (distalen) Seite des Sattelblocks 22 befindet. Dies ist zur Erzielung guter Kontrollierbarkeit der Bewegung des Schreibwerkzeugs bei gleichzeitig festem und komfortablem Halt der Schreibhilfe wichtig.

Am freien Ende der Schraube 28 ist gemäß Fig. 3 ein Greifteil (Felge) 48 aus Plastik befestigt, das der Behinderte mit den Schneidezähnen packen und damit die Schreibhilfe problemlos von der Hand 16 abziehen kann.

Fig. 5 zeigt die Hand 16, an welcher die Schreibhilfe 10 durch Aufschieben befestigt ist. Auf der Innenseite des Sattels 14 befindet sich eine Auflage 50 aus Moosgummi oder dergleichen. Das Schreibwerkzeug 12 befindet sich zwischen Daumen 24 und Zeigefinger 26 und dient hier zum Beschriften eines Papierblatts 50. Da der Sattel 14 mit einer einstellbaren Vorspannung gegen die Hand 16 anliegt, ist ein guter Sitz gewährleistet, und die Bewegungen der Hand werden präzise auf das Schreibwerkzeug 12 übertragen, so dass der Behinderte sauberer und deutlicher schreiben kann und auch eine Zeichentherapie erleichtert wird.

Wenn die Schreibhilfe 10 durch Herunterfallen verbogen wurde, kann sie leicht wieder in ihre alte Form gebracht werden. Die erforderliche Federkraft ist bei einer solchen Schreibhilfe leicht einstellbar. Der Moosgummi 50 erhöht die Haftung auf der Hand und ist warm und angenehm zu tragen.

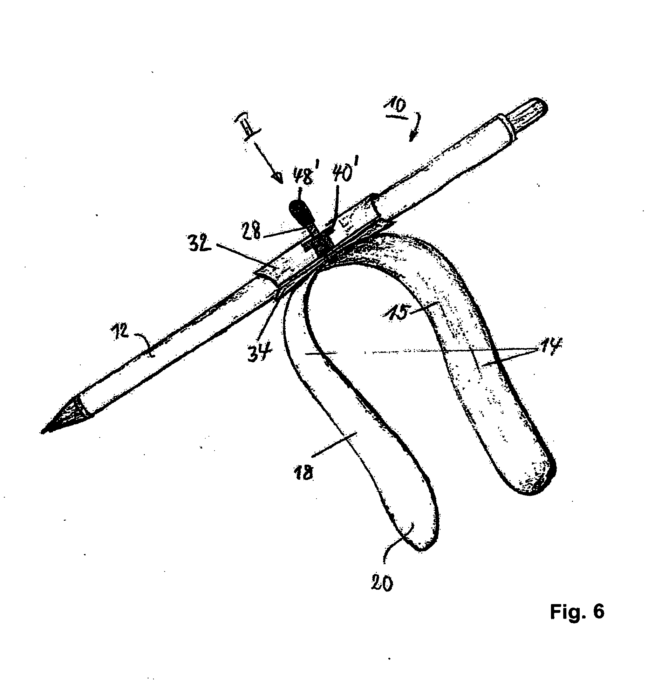

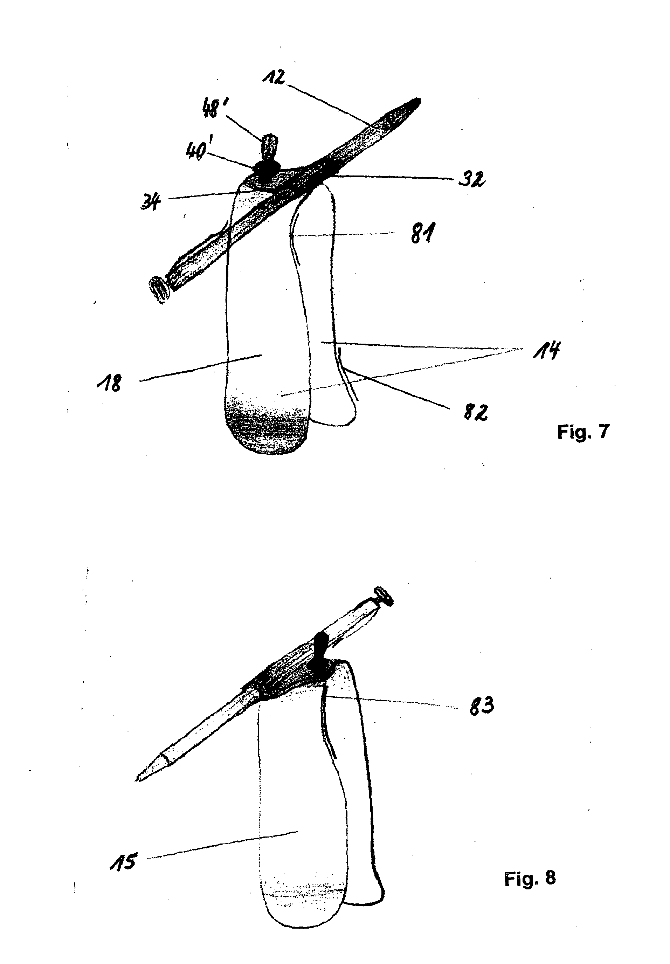

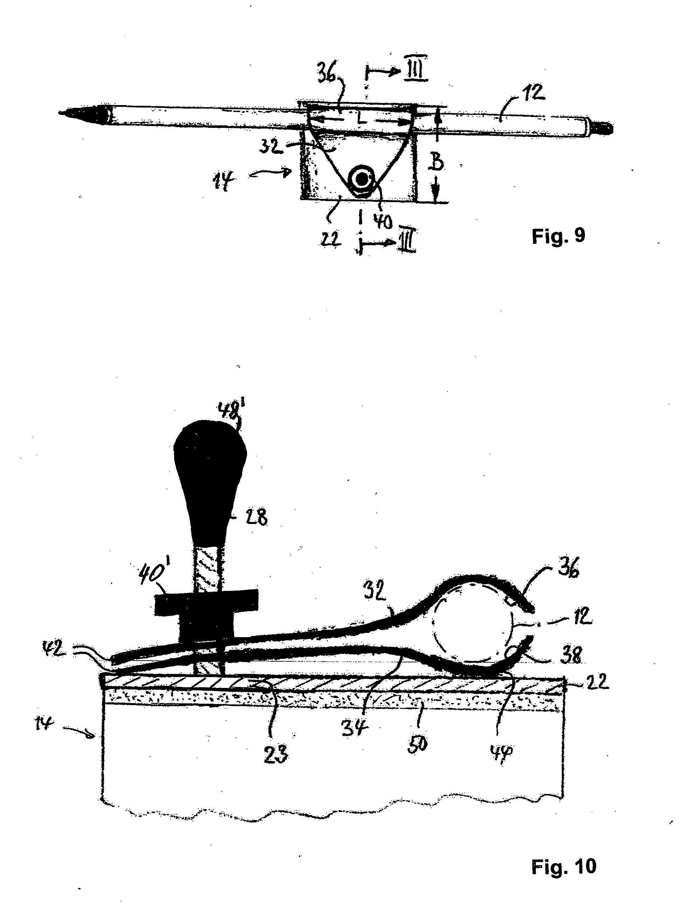

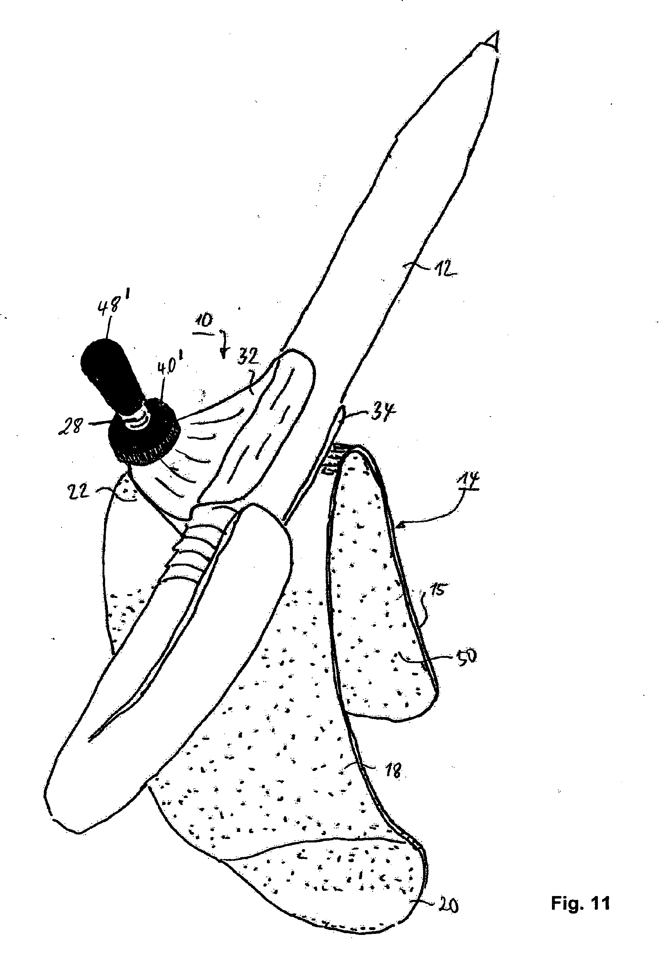

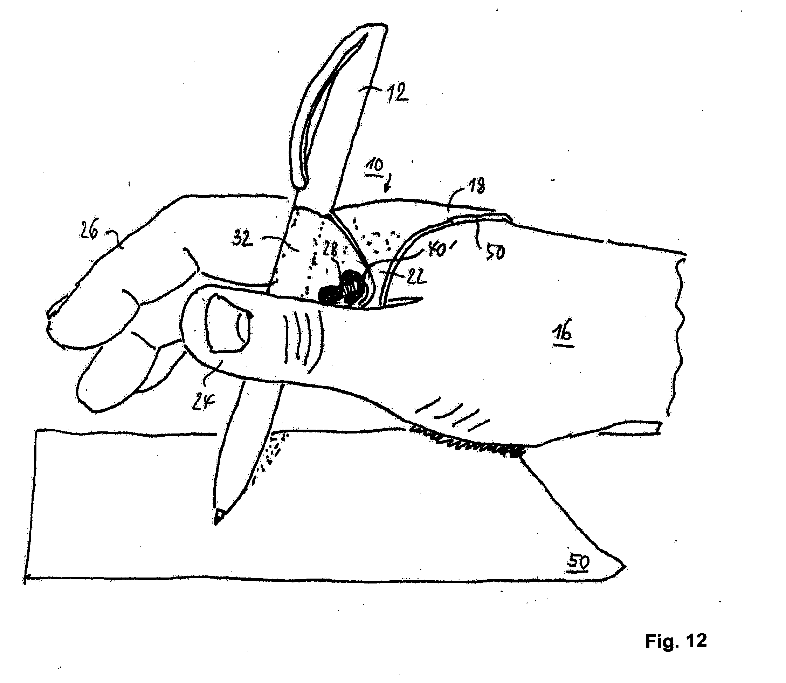

Die Figuren 6 bis 12 zeigen eine alternative und in der Regel bevorzugte Auführungsform der eben beschriebenen Schreibhilfe. Hierbei entspricht die Figur 6 der Figur 1, die Figur 9 der Figur 2 , die Figur 10 der Figur 3, die Figur 11 der Figur 4 und die Figur 12 der Figur 5. Die perspektivischen Darstellungen der Figuren 7 und 8 haben keine Entsprechung in der Darstellung der ersten Ausführungsform. Der grundsätzliche Aufbau ist derselbe wie im ersten Ausführungsbeispiel, so dass im folgenden nur auf die Unterschiede zum ersten Ausführungsbeispiel eingegangen wird:

Zunächst ist der Sattel, und vorzugsweise auch die Haltepratzen, aus Edelstahl hergestellt, da die duktilen Eigenschaften dieses Materials noch besser zur geometrischen Form der Schreibhilfe passen und sich somit sicherer Halt, gute Anpassbarkeit und hoher Tragekomfort ideal erreichen lassen.

Die Flügelmutter ist durch eine runde Edelstahlmutter 40' ersetzt, auf welcher ein aus Gummi bestehendes bestehendes Griffteil 48' befestigt ist. Diese Ausführung macht das "Ausziehen" der Schreibhilfe mit den Zähnen angenehmer. Ebenfalls aus Gründen erhöhten Komforts und guter Hautfreundlichkeit ist die Innenseite des Sattels mit Leder 50' belegt.

Wie bereits erläutert, liegt die Außenbacke 18 auf dem Handrücken auf. Um sicherzustellen, dass die Fingerknöchel frei bleiben, weist die Außenbacke auf ihrer den Fingern zugewandten Seite eine Aussparung 81 auf (s. Figur 7). Dies stellt zum einen sicher, dass die in der Regel empfindlichen Fingerknöchel unbelastet bleiben und unterstützt weiterhin ein flächiges Aufliegen der Außenbacke 18 auf dem Handrücken, da nicht die Gefahr besteht, dass die Außenbacke 18 auf den Fingerknöcheln aufsteht und so vom Handrücken abgehoben wird.

Die Innenbacke 15 liegt auf der Handfläche ergonomisch an. Um dies zu unterstützen, weist - wie in Figur 8 dargestellt - die Innenbacke 15 eine weitere Aussparung 83 auf, die um den Daumen-Ansatz-Ballen herum verläuft und somit besser auf der Hand-Innenfläche aufliegt.

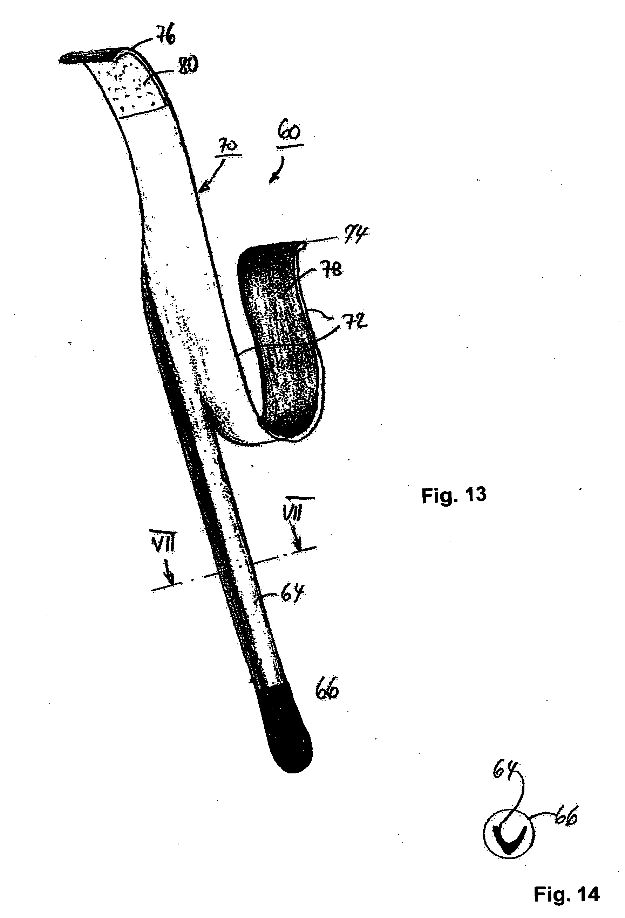

Die Fig. 13 bis 16 zeigen eine Tipphilfe 60, der vor allem zum Bedienen einer Tastatur 62 dient, wie in Fig. 8 und 9 beispielhaft dargestellt.

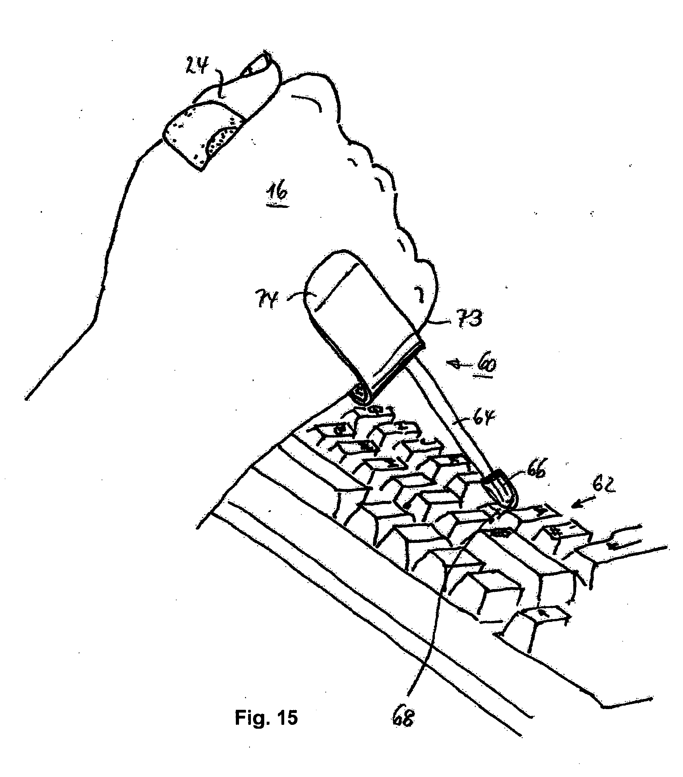

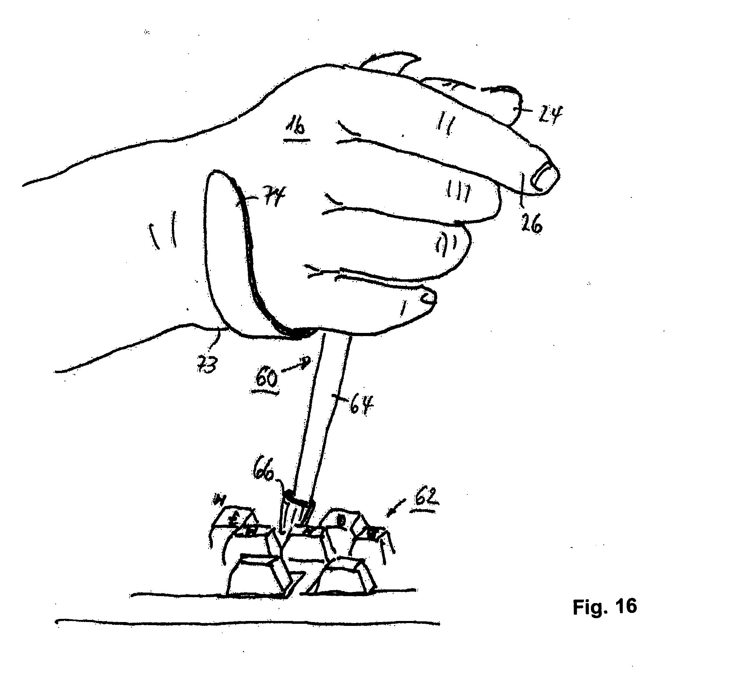

Die Tipphilfe 60 hat gemäß Fig. 13 einen Stiel 64, an dessen freiem Ende ein Gummiteil 66 befestigt ist, welches die Tastatur 62 schont. Fig. 15 und 16 zeigen, wie mit diesem Gummiteil 66 eine Taste 68 nieder gedrückt wird.

Der Stiel 64 ist dadurch gebildet, dass ein Blechteil etwa rechtwinklig abgebogen wird, wie in Fig. 14 dargestellt. Dieses Blechteil ist einstückig mit einem Sattelblech 70, das im Querschnitt etwa die Form hat wie das F-Loch (Schallloch) bei einer Violine.

Sein in Fig. 13 unterer Teil ist nach Art eines Sattels 72 ausgebildet, der bei Benutzung an einer Handkante 74 eingehängt wird, wie das die Fig. 15 und 16 zeigen, wobei das freie Ende 74 des Sattels 72 auf dem Handrücken aufliegt und im Endbereich etwas von diesem absteht, um dem Behinderten ein Abstreifen des Tipphammers 60 mit Hilfe der anderen Hand zu ermöglichen.

Der andere Teil des Sattels 72 ist gemäß Fig. 6 bevorzugt mit dem Stift 64 einstückig ausgebildet, und er geht in Fig. 6 oben in einen gebogenen Teil 76 über, der gemäß Fig. 15 gegen den Rücken des Daumens 24 anliegt, wodurch sich eine sehr stabile Lage relativ zur Hand 16 ergibt.

Auch hier ist die jeweilige konkave Seite von Sattelblech 72 und oberem gebogenem Teil 76 mit einer Moosgummi-Auflage 78 bzw. 80 versehen, um die Auflagefläche zu polstern und ein langes Arbeiten ohne Beschwerden zu ermöglichen.

Das Teil 70 wird auch hier bevorzugt aus Messingblech oder Edelstahl gefertigt, um die erforderliche mechanische Festigkeit, eine gewisse Federkraft, und ein für die Benutzung wünschenswertes Gewicht zu erzielen. Das im Vergleich zu Plastikteilen etwas höhere Eigengewicht wirkt sich deshalb positiv aus, weil der Behinderte die Schreibhilfe nicht auf das Papier drücken muss und sich deshalb auf die Schreibbewegungen konzentrieren kann.

Sehr positiv ist auch die hohe Lebensdauer der erfindungsgemäßen Hilfsmittel, und ihre Form kann individuell an einen Gipsabdruck der Hand des Behinderten angepasst werden, so dass man eine optimale Passform erhält, welche ein ermüdungsfreies Arbeiten ermöglicht. Ein Zerbrechen der Hilfsmittel beim Anziehen oder Ausziehen scheidet bei der Erfindung aus, und auch ein gelegentliches Herunterfallen, wie es bei Behinderten nicht zu vermeiden ist, hat keine bleibenden Schäden zur Folge.

## Patentansprüche

1. Behinderten-Hilfsmittel nach Art einer Schreibhilfe,
mit einem komplementär zur Hand ausgebildeten sattelartigen Teil, welches im Bereich seiner größten Krümmung, die bei Benutzung etwa zwischen Daumen und Zeigefinger liegt, einen Sattelblock aufweist,
ferner mit zwei einander gegenüber liegenden pratzenartigen Halteteilen, welche jeweils in einem Endbereich einen Abschnitt mit im wesentlichen halbrundem Querschnitt aufweisen,
welche Abschnitte zusammen eine Führung für ein Schreibwerkzeug bilden, z.B. für einen Bleistift oder einen Kugelschreiber,
und welche im anderen Endbereich durch eine Schraubverbindung mit dem Sattelblock verbunden sind, wobei das dem Sattelblock näher liegende Halteteil (34) zum einen im Bereich der Schraubverbindung und zum anderen im Bereich der Rundung beim Festhalten eines Schreibwerkzeugs mit Vorspannung gegen den Sattelblock anliegt.

2. Behinderten-Hilfsmittel nach Anspruch 1, bei welchem die Schraubverbindung lösbar ausgebildet ist, um das Schreibwerkzeug auswechseln zu können.

3. Behinderten-Hilfsmittel nach Anspruch 1 oder 2, bei welchem an der Schraubverbindung ein Eingriffsteil (48) vorgesehen ist, das vom Behinderten mit den Zähnen ergriffen werden kann, um die Schreibhilfe von seiner Hand (16) abzuziehen.

4. Behinderten-Hilfsmittel nach einem der vorhergehenden Ansprüche, bei welchem das sattelartige Teil an seinem bei Benutzung gegen den Handrücken anliegenden Abschnitt im Endbereich (20) vom Handrücken weggebogen ist, um das Hilfsmittel vermittels des Handrückens der anderen Hand abziehen zu können.

5. Behinderten-Hilfsmittel nach Art einer Tipphilfe,
mit einem komplementär zur Hand ausgebildeten Teil, welches dazu ausgebildet ist, eine Handkante (74) mit einem im Querschnitt U-förmigen Teil (72) sattelartig zu umgreifen,
wobei ein handrückenseitiger Schenkel (75) des U gegen den Handrücken zu liegen kommt,
und am anderen, handflächenseitigen Schenkel ein in Richtung weg von der Hand (16) weisender Fortsatz (64) vorgesehen ist, der an seinem freien Ende mit einem Teil (66) aus elastomerem Werkstoff zum Antippen einer Tastatur (62) oder dergleichen versehen ist,
und dieser andere Schenkel einen Abschnitt (76) aufweist, der dazu ausgebildet ist, bei Benutzung gegen eine Seite des Daumens (24) dieser Hand anzuliegen und eine Krümmung zur Anlage gegen diese Daumenseite aufweist.

6. Behinderten-Hilfsmittel nach Anspruch 5, bei welcher der dem Handrücken zugewandte Schenkel des U einen Endbereich aufweist, der bei Benutzung etwas vom Handrücken weg gebogen ist, um für einen Behinderten das Abziehen dieses Hilfsmittels unter Zuhilfenahme der anderen Hand zu erleichtern.

7. Behinderten-Hilfsmittel nach einem der vorhergehenden Ansprüche, bei welchem die komplementär zur Hand ausgebildeten Teile aus Metall, insbesondere Edelstahl, ausgebildet und auf ihrer der Hand zugewandten Seite gepolstert ausgebildet sind.

8. Behinderten-Hilfsmittel nach Anspruch 7, bei welchem die Polsterung (50; 78, 80) als Beschichtung aus Leder oder dergleichen ausgebildet ist.
